(19)

**Europäisches Patentamt**

**European Patent Office**

**Office européen des brevets**

(11) **EP 4 293 454 B1**

(12) **EUROPEAN PATENT SPECIFICATION**

(45) Date of publication and mention
of the grant of the patent:
**19.11.2025 Bulletin 2025/47**

(21) Application number: **23178998.3**

(22) Date of filing: **13.06.2023**

(51) International Patent Classification (IPC):
**G05B 19/418** (2006.01)

(52) Cooperative Patent Classification (CPC):
**G05B 19/41875;** G05B 19/41805; G05B 19/4183;
G05B 19/4184; G05B 19/4185; G05B 2219/31462;
G05B 2219/34397

(54) **METHOD AND SYSTEM FOR SYNCHRONIZING PLURALITY OF EVENTS IN AN ASSEMBLY LINE**

VERFAHREN UND SYSTEM ZUR SYNCHRONISATION MEHRERER EREIGNISSE IN EINER
MONTAGELINIE

PROCÉDÉ ET SYSTÈME DE SYNCHRONISATION D'UNE PLURALITÉ D'ÉVÉNEMENTS DANS
UNE LIGNE D'ASSEMBLAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.06.2022 IN 202241033679**

(43) Date of publication of application:
**20.12.2023 Bulletin 2023/51**

(73) Proprietors:
• **Tata Consultancy Services Limited
Maharashtra (IN)**
• **Indian Institute of Science
Bangalore-Karnataka 560 012 (IN)**

(72) Inventors:
• **Bhandari, Gaurav
560012 Bangalore (IN)**
• **D, Raghunath
560012 Bangalore (IN)**
• **Hiremath, Prakash M
560012 Bangalore (IN)**

• **Joglekar, Ashish Vasant
560012 Bangalore (IN)**
• **Kulkarni, Devadatta Madhukar
Hills, MI 48307 (US)**
• **Mohanty, Sampad
Los Angeles, CA 90007 (US)**
• **Prabhu, Venkatesh
560012 Bangalore (IN)**
• **Shorey, Rajeev
122 002 Haryana (IN)**
• **Sundaresan, Rajesh
560012 Bangalore (IN)**
• **Tew, Jeffrey David
Rochester, MI 48306 (US)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2008 079 595     US-A1- 2021 048 798
US-A1- 2021 116 902     US-A1- 2021 266 084**

**Description**

CROSS-REFERENCE TO RELATED APPLICATIONS AND PRIORITY

The present application claims priority to Indian application no. 202241033679, filed on June 13, 2022.

TECHNICAL FIELD

The present subject matter is generally related to the field of time synchronization technology, more particularly, but not exclusively to a method and system for synchronizing plurality of events associated with one or more processes in an assembly line for tracing an entity.

BACKGROUND

In manufacturing assembly lines, manufacturing components come from various points such as production line, manufacturing line, and the like and are assembled in a manufacturing assembly line. Tracing the manufactured components is important as the components may be recalled for repair or replacement in the manufacturing companies. For example, consider an Electronic Control Unit (ECU) of a vehicle is manufactured in an automobile industry and the manufactured ECU goes through some faulty manufacturing process at a certain time. In such case, the ECU needs to be recalled for repair or replacement. Typically, manufacturing companies may assign quality indices to the manufactured components depending on either normalcy of process flow or level of stoppage or fault in the manufacturing line, at the time of manufacturing of that component. For instance, a component may be assigned a lower quality index depending on the fault. These quality indices enables better and targeted recalls and reduces cost.

Generally, tracing the manufactured components is difficult in long manufacturing lines. **In** the manufacturing lines there are many processes which needs to be monitored. Further, data related to the monitoring is processed and compressed and sent to a central entity for further processing. However, during transmission process, there may be congestions, delays, re-ordering, and loss of the data. Also, timestamps of the data at various stages in the manufacturing line may not be perfect as each device in the manufacturing line operates with its own clock. Thus, it may be difficult to trace the components when a fault is detected.

Currently, though existing systems trace the components in the manufacturing lines using batch numbers, manufacturing dates and so on. The existing system are unable to efficiently track the components as each device have their individual clocks and there is no mechanism of synchronizing clock times of the devices. Further the existing systems do not provide any method to synchronize individual clock times of the devices to recall the components efficiently in case any defect is detected.

The information disclosed in this background of the disclosure section is only for enhancement of understanding of the general background of the invention and should not be taken as an acknowledgement or any form of suggestion that this information forms the prior art already known to a person skilled in the art. Document (US 2021/048798 A1) discloses techniques to facilitate synchronization of industrial assets in an industrial automation environment. In at least one implementation, a computing system receives time-series industrial process data associated with a plurality of process subsystems of an industrial automation process. The time-series industrial process data is fed into a machine learning model associated with the industrial automation process to dynamically generate a process duration prediction for a first one of the process subsystems and responsively determine an updated set point for a second one of the process subsystems based on the process duration prediction for the first one of the process subsystems. The updated set point for the second one of the process subsystems is provided to an industrial controller associated with the second one of the process subsystems (Abstract).

SUMMARY

Embodiments of the present disclosure present technological improvements as solutions to one or more of the above-mentioned technical problems recognized by the inventors in conventional systems. For example, in an embodiment, the present disclosure relates to a method for synchronizing plurality of events associated with one or more processes in an assembly line for tracing an entity as defined in claim 1.

In an embodiment, the present disclosure relates to a synchronization system for synchronizing plurality of events associated with one or more processes in an assembly line for tracing an entity as defined in claim 6.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and regarding the accompanying figures, in which:

**Figure 1** shows an environment for synchronizing plurality of events associated with one or more processes in an assembly line for tracing an entity, in accordance with some embodiments of the present disclosure.
**Figure 2** shows a detailed block diagram of a synchronization system for synchronizing plurality of events associated with one or more processes in an assembly line, in accordance with some embodiments of the present disclosure.
**Figure 3** illustrates a block diagram for synchronizing plurality of events associated with one or more processes in an assembly line, in accordance with some embodiments of present disclosure.
**Figure 4** illustrates an embodiment for mapping plurality of events associated with one or more processes in an assembly line for tracing an entity, in accordance with some embodiments of present disclosure.
**Figure 5** illustrates a flow diagram showing a method for synchronizing plurality of events associated with one or more processes in an assembly line, in accordance with some embodiments of present disclosure.
**Figure 6** illustrates a block diagram of a computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether such computer or processor is explicitly shown.

DETAILED DESCRIPTION OF EMBODIMENTS

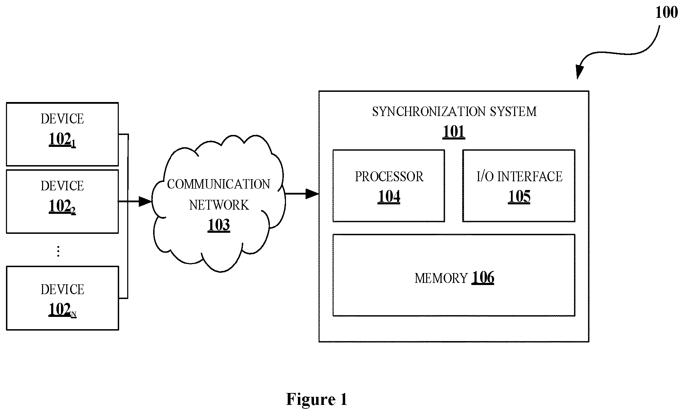

In the present document, the word "exemplary" is used herein to mean "serving as an example, instance, or illustration." Any embodiment or implementation of the present subject matter described herein as "exemplary" is not necessarily to be construed as preferred or advantageous over other embodiments.
While the disclosure is susceptible to various modifications and alternative forms, specific embodiment thereof has been shown by way of example in the drawings and will be described in detail below.
The terms "comprise", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.
The terms "include", "including", or any other variations thereof, are intended to cover a non-exclusive inclusion, such that a setup, device, or method that includes a list of components or steps does not include only those components or steps but may include other components or steps not expressly listed or inherent to such setup or device or method. In other words, one or more elements in a system or apparatus proceeded by "includes... a" does not, without more constraints, preclude the existence of other elements or additional elements in the system or method.
In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.
Referring now to the drawings, and more particularly to figures 1 to 6, where similar reference characters denote corresponding features consistently throughout the figures, there are shown preferred embodiments and these embodiments are described in the context of the following system and/or method.
Present disclosure relates to a method and a synchronization system for synchronizing plurality of events associated with one or more processes in an assembly line for tracing an entity. The entity may refer to an object or a component which is manufactured in a manufacturing industry. Generally, devices in manufacturing industries have their own clock time and offsets which needs to be synchronized in order to trace the entity incase when a fault is detected. The synchronization system receives plurality of events associated with the one or more processes from the one or more devices, where each of the plurality of events have their own respective first timestamps. The first timestamp is synchronized between the plurality of events by performing a two-level synchronization. The first timestamp is synchronized to a second timestamp with respect to a common reference timestamp to trace the entity. Thus, the present disclosure synchronizes the plurality of events of the one or more devices in the manufacturing industries in order to efficiently trace entities.

**Figure 1** shows an environment 100 for synchronizing plurality of events associated with one or more processes in an assembly line for tracing an entity. The environment 100 may include a synchronization system 101, one or more devices ($102_1$, $102_2$... ... $102_N$, hereinafter referred as one or more devices102) and a network 103. In an embodiment, the synchronization system 101 may be implemented in the one or more devices 102 associated with a manufacturing industry. The manufacturing industry may include, but is not limited to, automobile manufacturing industry, printer manufacturing industry, electronics manufacturing industry, and the like. The one or more devices 102 are used for manufacturing the component/entity at the manufacturing industry. The one or more devices 102 may include, but not limited to, a line loader, a screen printer, a pick-and-place machine, a reflow oven, a line unloader, a computerized milling machine, a boring machine, and the like. A person skilled in the art may understand that the one or more devices may vary based on the manufacturing industry. The synchronization system 101 may include, but is not limited to, mobile phone, a tablet, a smart phone, a laptop computer, a desktop computer, a Personal Computer (PC), a notebook and the like. The one or more devices 102 communicates with the synchronization system 101 via the communication network 103 for synchronizing a plurality of events associated with one or more processes in the assembly line for tracing an entity. The entity may refer to an object or a component which is manufactured in a manufacturing industry. The entity may include, but is not limited to, ECU, water bottles, sensor board, printers, and the like. A person skilled in the art may understand that the entity may vary based on the type of manufacturing industry. Further, the synchronization system 101 may include a processor 104, I/O interface 105, and a memory 106. In some embodiments, the memory 106 may be communicatively coupled to the processor 104. The memory 106 stores instructions, executable by the processor 104, which, on execution, may cause the synchronization system 101 to synchronize the plurality of events associated with one or more processes in the assembly line for tracing the entity, as disclosed in the present disclosure.

In an embodiment, the communication network 103 may include, without limitation, a direct interconnection, Local Area Network (LAN), Wide Area Network (WAN), Controller Area Network (CAN), wireless network (e.g., using a Wireless Application Protocol), the Internet, and the like.

The synchronization system 101 may receive information related to the plurality of events associated with the one or more processes from the one or more devices 102 in the assembly line. The plurality of events may be procedures associated with manufacturing of the component/entity at the manufacturing industry. The one or more processes may vary based on the manufacturing industry. The one or more processes may include, but is not limited to, sheet-fed process, R2R process, additive manufacturing process, and the like. A person skilled in the art may understand that the plurality of events, the one or more processes may be related to any manufacturing industry. Each of the plurality of events include a respective first timestamp. For example, consider a plastic bottle manufacturing industry. The plurality of events related to bottle manufacturing may include, but is not limited to, melting plastic by heat, providing shape to parison, heating the parison by quartz heater, cooling the plastic, and the like. The one or more processes related to bottle manufacturing may include, but is not related to, preparing plastic pellets, generating parison, re-heat process, cooling process, and the like. The one or more devices 102 related to the bottle manufacturing may include, but is not limited to, injection moulding device, blow moulding device, and the like.

Particularly, the information received by the synchronization system 101 may include plurality of steps. Initially, the synchronization system 101 analyses one or more parameters related to the one or more devices 102 in the assembly line. The one or more parameters may include, but is not limited to, if a machine is a legacy machine used for manufacturing the entity, if the machine is internetworked or not internetworked, if modifications is possible to the machines, and the like. The term machine and the one or more devices 102 are same and have been used alternatively in the present description. Upon analysing, the synchronization system 101 identifies one or more sensors and positioning of the one or more sensors at the one or more devices 102. Further, knowing what information to sense, where to sense, and how to sense is very important for identifying the one or more sensors and the positioning of the one or more sensors. For example, consider a line loader, the line loader has vibrations as it pushes boards. Therefore, the type of sensors which is required may be a vibration sensor and a proximity sensor. Similarly, for a screen printer, the type of sensor which may be required is an energy meter as the screen printer may consume high power during and thus its state could be better tracked by the energy meter. Similarly, a proximity sensor may be placed between two pick-and-place machines to track movement in conveyor belt. Further, the synchronization system 101 may determine a rate for sensing information by the identified one or more sensors. The information relates to the plurality of events associated with the one or more processes of the one or more devices 102. For example, the proximity sensors are to be calibrated suitably to ensure that only relevant and compressed on/off (present/absent) binary data is submitted to a server. Similarly, vibration sensor data may be transmitted at a high rate to enable proper machine state signature is captured. Similarly, the speed of the conveyor belt may be different at different places, and the proximity sensors near the high-speed conveyor belts may have to sample at higher rates in accordance with the speeds. Upon determining the rate, the synchronization system 101 determines a rate of synchronizing the plurality of events for the first level synchronization. **In an** embodiment, the rate of synchronizing the plurality of events relates to interaction between the one or more devices 102 in the assembly line. For example, if the line loader and the pick-up-place machine interact frequently then the rate of synchronizing the plurality of events may be high. While, if the line loader and the pick-up-place machine interact less frequently then the rate of synchronizing the plurality of events may be low. Upon determining the rate of synchronizing the plurality of events, the synchronization system 101 determines a network for transmitting the information related to the plurality of events. The plurality of events is synchronized upon transmission of the information. During transmission of the information, the information/data from the one or more devices 102 are safely transported to a local server. The transmission can be performed in one or more ways. The one or more ways may include, but is not limited to, a single-hop way, a multi-hop way and the like. The transmission of the information/data must be done in such a way that there is minimal data loss due to congestion, packet error, and the like so that the entity can be traced efficiently. For example, consider packetized transmission of the information/data. **In** the packetized transmission, the packets may need to be suitably ordered at delivery point. **In** an embodiment, mode of transmission of the information may also be based on distance over which the data must be transported for synchronization.

Upon receiving the information, the synchronization system 101 synchronizes the first timestamp between each of the plurality of events by performing a first level synchronization and a second level synchronization. The first level synchronization includes correlating each pair of events from the plurality of events based on their respective first timestamp. The first timestamp is related to respective events in the pair of events to obtain synchronization parameters. Correlating each of the pair of events of the plurality of events based on the first timestamp is controlled periodically based on rate of skew drift of the plurality of events and frequency of correlating the first timestamp of the plurality of events. That is, the pair of events are correlated based on their skew drift rate and how often the devices associated with the plurality of events interact with each other. While in the second level of synchronization, the synchronization parameters are updated to convert the first timestamp of each of the plurality of events to the second timestamp with respect to a common reference timestamp. That is, the synchronization system 101 converts the first timestamp of each of the plurality of events into a global timestamp (also referred as the second timestamp in the present description) with respect to the common reference timestamp by updating the synchronization parameters. The synchronization parameters comprise skew drift and offset value related to the first timestamp of each of the plurality of events. In an embodiment, the synchronization system 101 may provide feedback to the network for one or more corrective actions when the first timestamp of the plurality of events are not synchronized.

Upon synchronizing, the synchronization system 101 maps the plurality of events based on weights assigned to each pair of events of the plurality events and weights assigned to each event within each of the pair of events. The weights assigned to each of the plurality of events is based on predefined parameters. The predefined parameters may include, but is not limited to, an arrival time, a departure time and a processing duration of the entity, number of distinct data associated with the plurality of events, and the like. Upon mapping, the synchronization system 101 traces an entity obtained from the one or more processes in the assembly line based on the mapping of the plurality of events. For example, in the bottle manufacturing, the entity may be a bottle.

In an embodiment, the synchronization system 101 identifies one or more defects in the entity based on a corresponding quality value assigned to the entity. The quality value is a combination of weights assigned to each of the plurality of events. For example, in the bottle manufacturing, the one or more defects identified may include, but is not limited to, defect in the shape of the bottle, defect in the parison, and the like. A person skilled in the art may understand that the one or more defects may depend on the type of entity being manufactured at the manufacturing industry. Upon identifying the one or more defects, the synchronization system 101 may recall the entity associated with the one or more defects and replace with a new entity or repair the entity.

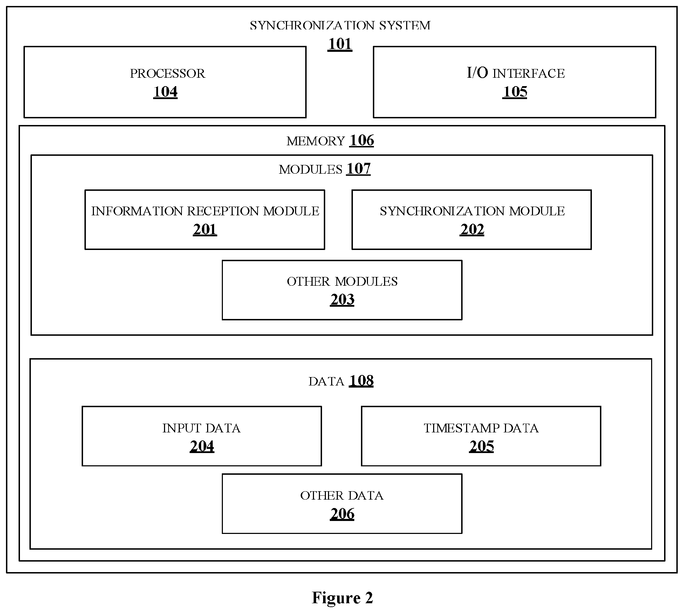

**Figure** 2 shows a detailed block diagram of a synchronization system for synchronizing plurality of events associated with one or more processes in an assembly line for tracing an entity, in accordance with some embodiments of the present disclosure.

Data 108 and the one or more modules 107 in the memory 106 of the synchronization system 101 is described herein in detail. **In** one implementation, the one or more modules 107 may include, but are not limited to, an information reception module 201, a synchronization module 202, and one or more other modules 203, associated with the synchronization system 101. **In** an embodiment, the data 108 in the memory 106 may include input data 204, timestamp data 205, and other data 206 associated with the synchronization system 101.

**In** an embodiment, the data 108 in the memory 106 may be processed by the one or more modules 107 of the synchronization system 101. **In** an embodiment, the one or more modules 107 may be implemented as dedicated units and when implemented in such a manner, said modules may be configured with the functionality defined in the present disclosure to result in a novel hardware. As used herein, the term module may refer to an Application Specific Integrated Circuit (ASIC), an electronic circuit, a Field-Programmable Gate Arrays (FPGA), Programmable System-on-Chip (PSoC), a combinational logic circuit, and/or other suitable components that provide the described functionality.

One or more modules 107 of the present disclosure along with the data 108 functions to synchronize plurality of events associated with one or more processes in the assembly line for tracing the entity.

The input data 204 may include information related to the plurality of events associated with the one or more processes from the one or more devices 102 in the assembly line. The information may include details about the plurality of events and respective first timestamp related to the entity which is manufactured at the manufacturing industry.

The timestamp data 205 comprises the first timestamp associated with the plurality of events. The first timestamp refers to the local timestamp associated with each of the plurality of events. Also, the timestamp data 205 comprises the second timestamp obtained by converting the first timestamp with respect to a common reference timestamp.

The other data 206 may store data, including temporary data and temporary files, generated by modules for performing the various functions of the synchronization system 101.

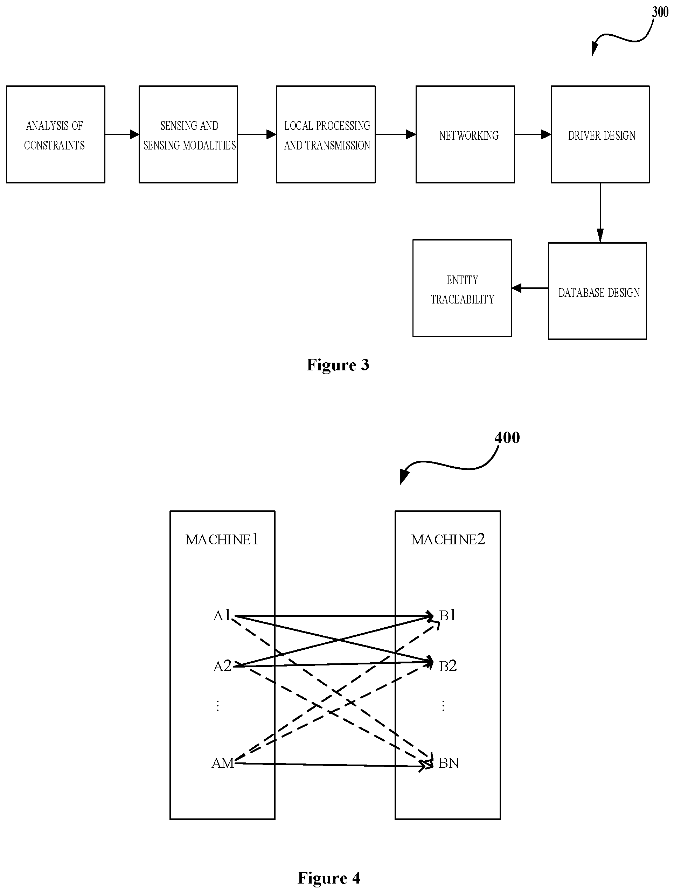

The information reception module 201 may receive information related to the plurality of events associated with the one or more processes from the one or more devices 102 in the assembly line. Each of the plurality of events comprises the respective first timestamp. For example, consider melting of plastic by heat as one of the events which occurred at 10:00 AM, providing shape to parison is another event which occurred at 11:30 AM, heating the parison by quartz heater which occurred at 2:30 PM, and cooling the plastic which occurred at 5:00 PM. The above-mentioned timestamps for the plurality of events may be referred as the first timestamp. The information related to the plurality of events is received by performing one or more steps. **Figure 3** shows the steps for receiving the information related to the plurality of events. Initially, the information reception module 201 analyses one or more parameters related to the one or more devices 102 in the assembly line. The one or more parameters may include, but is not limited to, if a machine is a legacy machine, if the machine is internetworked or not internetworked, if modifications is possible to the machines, and the like. In an embodiment, the one or more parameters may be taken as constraints for decision making. Upon analysing, the information reception module 201 may identify one or more sensors and positioning of the one or more sensors at the one or more devices 102. Further, the information reception module 201 may sense the information using the one or more sensors. For example, consider a line loader, the line loader has vibrations as it pushes boards. Therefore, the type of sensors which is required may be a vibration sensor and a proximity sensor. Similarly, for a screen printer, the type of sensor which may be required is an energy meter as the screen printer may consume high power during and thus its state could be better tracked by the energy meter.

Similarly, a proximity sensor may be placed between two pick-and-place machines to track movement in conveyor belt. Further, the information reception module 201 may determine the rate for sensing information by the identified one or more sensors. For example, the proximity sensors are to be calibrated suitably to ensure that only relevant and compressed on/off (present/absent) binary data is submitted to a server. Similarly, the vibration sensor data may be transmitted at a high rate to enable proper machine state signature is captured. Similarly, the speed of the conveyor belt may be different at different places, and the proximity sensors near the high-speed conveyor belts may have to sample at higher rates in accordance with the speeds. Upon determining the rate, the information reception module 201 determines a rate of synchronizing the plurality of events for the first level synchronization. **In an** embodiment, the rate of synchronizing the plurality of events relates to interaction between the one or more devices 102 in the assembly line. For example, if the line loader and the pick-up-place machine interact frequently then the rate of synchronizing the plurality of events may be high. While, if the line loader and the pick-up-place machine interact less frequently then the rate of synchronizing the plurality of events may be low. Upon determining the rate of synchronizing the plurality of events, the information reception module 201 determines a network for transmitting the information related to the plurality of events. The plurality of events is synchronized upon transmission of the information.

During transmission of the information, the information/data from the one or more devices 102 are safely transported to a local server. The transmission can be performed in one or more ways. The one or more ways may include, but is not limited to, a single-hop way, a multi-hop way and the like. The transmission of the information/data may be performed in such a way that there is minimal data loss due to congestion, packet error, and the like so that the entity can be traced efficiently. For example, consider packetized transmission of the information/data. In the packetized transmission, the packets need to be suitably ordered at delivery point. In an embodiment, mode of transmission of the information may also be based on distance over which the data must be transported for synchronization. In an embodiment, the information/data may be transferred in one or more ways to a gateway or relay. The gateways relay the information/data to the local server. Finally, the local server either sends it to storage or the cloud for processing. The one or more ways may include, but is not limited to, Bluetooth, wired interface, General Purpose Input/Output (GPIO), one or more protocols, Modbus protocol, and the like.

Upon receiving the information related to the plurality of events, the synchronization module 202 may synchronize the first timestamp between each of the plurality of events by performing a first level synchronization and a second level synchronization. The first level synchronization comprises correlating each of a pair of events of the plurality of events based on the first timestamp related to respective events in the pair of events to obtain synchronization parameters. The synchronization parameters comprise skew drift and offset value related to the first timestamp of each of the plurality of events. For example, consider a device "i" maintains number of offset update measurements $M_{ij}$ (estimate of $\alpha_{ij}$ and

estimate of $O_{ij}$) from a device "j" to the device "i". The device i makes the network update only if all (other devices') neighbours' $M_{ij}$'s at the device i are balanced, i.e., all of them are roughly equal where tolerance from equality is measured according to some discrimination or distance measure. In an embodiment, if it is determined that the update needs to be performed, the update is performed using equation (1) as shown below.

$$\hat{O}_i \leftarrow (1-a)\hat{O}_i + a(\hat{O}_j + \hat{O}_{ji}) \dots\dots\dots\dots\dots\dots\dots\dots\dots\dots\dots\dots\dots\dots (1)$$

Further, if the offset update measurement is received, and the measurement count is in excess (as determined using the equation 1), then the measurement is saved in the memory 106 in case a deficiency is noticed due to other devices' updates. In an embodiment, sum of the offset value in any loop is "0" and product of the skew drift in any loop is "1". Also, the skew drift may be alternatively written as the sum of logarithm of the pairwise skews is "0". This may be performed by using techniques such as, a gossip algorithm, as shown in equation 2 below:

$$\hat{O}_i \leftarrow n_i^{-1} \sum_{j \in N_i} (\hat{O}_j + \hat{O}_{ji})$$

$$\log \hat{\alpha}_i \leftarrow n_i^{-1} \sum_{j \in N_i} (\log \hat{\alpha}_j + \log \hat{\alpha}_{ji}) \dots\dots\dots\dots\dots\dots\dots\dots\dots\dots\dots\dots\dots (2)$$

The synchronization module 202 further performs the second level of synchronization by updating the synchronization parameters to convert the first timestamp of each of the plurality of events to the second timestamp with respect to a common reference timestamp. For example, consider the common reference timestamp is denoted by "t" and a device "i" whose clock displays the first timestamp as given in equation 3 below:

$$T_i(t) = \alpha_i t + O_i \dots\dots\dots\dots\dots\dots\dots\dots\dots\dots\dots\dots\dots\dots\dots\dots\dots\dots\dots (3)$$

Wherein,

$\alpha_i$ is skew drift of the device i's clock with respect to the common reference timestamp;
$O_i$ is offset value of the device i's clock with respect to the common reference timestamp.

In an embodiment, if each device of the one or more devices 102 includes estimate of its skew drift and offset value, the device may imprint the common reference timestamp. The above equation (1) can be written for another device j's time with respect to the device i's time as given below in equation 4:

$$T_j(t) = (\alpha_j/\alpha_i)T_i(t) + (O_j - (\alpha_j/\alpha_i)O_i) = \alpha_{ij}T_i(t) + O_{ij} \dots\dots\dots\dots (4)$$

Wherein,

$\alpha_{ij}$ is skew drift of the device j's clock with respect to the device i's clock;
$O_{ij}$ is offset value of the device j's clock with respect to the device i's clock.

In an embodiment, the first level of synchronization ensures that the skew drift ($\alpha_{ij}$) and the offset value ($O_{ij}$) of the plurality of events associated with the one or more processes of the one or more devices 102 are well-estimated. Estimating the skew drift and the offset value involves a series of steps such as, filtering to reduce noise. The noise sources may include, but is not limited to, protocol delays, hardware latch delays, transmission delays, propagation delays, and the like. The noise may be filtered using one or more techniques such as, recursive least squares estimates and other filtering techniques. The one or more filtering techniques aims at reducing the errors/noises and provide a better estimate of pairwise skew drift and offset value. The skew draft and the offset value are referred as the synchronization parameters and stored in the memory 106.

Further, the synchronization module 202 maps the plurality of events based on weights assigned to each pair of events of the plurality events and weights assigned to each event within each of the pair of events. The weights assigned to each of the plurality of events is based on the predefined parameters. The predefined parameters comprise arrival time, departure time, processing duration of the entity and number of distinct data associated with the plurality of events. Upon mapping, the synchronization module 202 may trace the entity obtained from the one or more processes in the assembly line based on the mapping of the plurality of events. For example, **Figure 4** shows an embodiment for mapping plurality of events associated with the one or more processes in the assembly line for tracing an entity. As shown, consider machine1 and machine2 are the two pick-up-place machine of the manufacturing industry and A1, A2, ...Am and B1, B2...., Bn are the plurality of events of the machine 1 and machine 2, respectively. The weights assigned to the plurality of events are based on goodness of association of each departure time in the releasing machine1 and the arrival time in the receiving machine2. In an embodiment, the plurality of events which are inconsistent are assigned zero weight. Similarly, the plurality of events having large distances between the arrival time and the departure time are also assigned low weight. In an embodiment, one way to assign weights is to use likelihood function p ($\cdot$). However, if the likelihood function is not known, parametric model and fit parameters may be used to assign the weights. For example, the weight between, an exit event A1 and an entry event B2, may be assigned by using equation 5.

$$w_{A_1B_2} = w_A(A_1)p_{AB}\big(d_{B_2} - d_{A_1}\big)w_B(B_2)\dots\dots\dots\dots\dots\dots\dots\dots\dots\dots\dots\dots\dots\dots\dots\dots (5)$$

Upon assigning weight, the synchronization module 202 performs maximum weight matching using a weighted bipartite graph. A graph is called weighted bipartite graph if each edge in graph had an associated weight. Further, upon assigning weights to the plurality of events the one or more devices 102 may be associated into a single association to trace the entity.

In an embodiment, the other module 203 may include defect identification module for identifying one or more defects in the entity based on a corresponding quality value assigned to the entity. The quality value is a combination of weights assigned to each of the plurality of events. Upon identifying, the defect identification module may recall the entity associated with one or more defects for repairing or replacing the entity. For example, in a sensor manufacturing industry, consider the sensor which is manufactured is faulty. The defect identification module may identify the defect and replace/repair the sensor.

The one or more modules 107 may also include other modules 203 to perform various miscellaneous functionalities of the synchronization system 101. It will be appreciated that such modules may be represented as a single module or a combination of different modules.

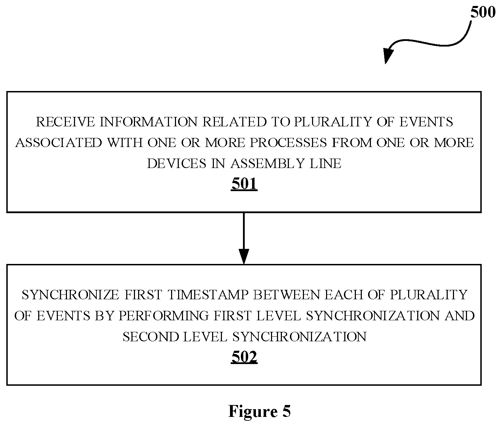

**Figure 5** illustrates a flow diagram showing a method for synchronizing plurality of events associated with one or more processes in the assembly line, in accordance with some embodiments of present disclosure.

As illustrated in **Figure 5,** the method 500 may include one or more blocks for executing processes in the synchronization system 101. The method 500 may be described in the general context of computer executable instructions. Generally, computer executable instructions can include routines, programs, objects, components, data structures, procedures, modules, and functions, which perform particular functions or implement particular abstract data types.

The order in which the method 500 are described may not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block 501, receiving, by the information reception module 201, information related to the plurality of events associated with the one or more processes from one or more devices 102 in the assembly line. Each of the plurality of events comprises a respective first timestamp.

Particularly, the information reception module 201 may receive the information related to the plurality of events by analysing one or more parameters related to the one or more devices 102 in the assembly line. The information relates to the plurality of events associated with the one or more processes of the one or more devices 102. Upon analysing, the information reception module 201 may identify one or more sensors and positioning of the one or more sensors at the one or more devices 102. Upon identifying, the information reception module 201 may determine the rate for sensing information by the identified one or more sensors. Upon determining the rate, the rate of synchronizing the plurality of events for the first level synchronization is determined. The rate of synchronizing relates to interaction between the one or more devices 102 in the assembly line. Further, the information reception module 201 may determine the network for transmitting the information related to the plurality of events, where the plurality of events is synchronized.

At block 502, synchronizing, by the synchronization module 202, the first timestamp between each of the plurality of events by performing the first level synchronization and the second level synchronization. In the first level synchronization, each of the pair of events of the plurality of events are correlated based on the first timestamp related to respective events in the pair of events to obtain synchronization parameters. Controlling correlation of each of the pair of events of the plurality of events is performed periodically based on rate of skew drift of the plurality of events and frequency of correlating the first timestamp of the plurality of events. In the second level of synchronization, the synchronization parameters are updated to convert the first timestamp of each of the plurality of events to the second timestamp with respect to the common reference timestamp.

In an embodiment, the plurality of events may be mapped based on weights assigned to each pair of events of the plurality events and weights assigned to each event within each of the pair of events. The weights assigned to each of the plurality of events is based on predefined parameters. The predefined parameters may comprise arrival time, departure time, processing duration of the entity and number of distinct data associated with the plurality of events. Upon mapping, the synchronization module 202, may trace the entity obtained from the one or more processes in the assembly line based on the mapping of the plurality of events.

Computing System

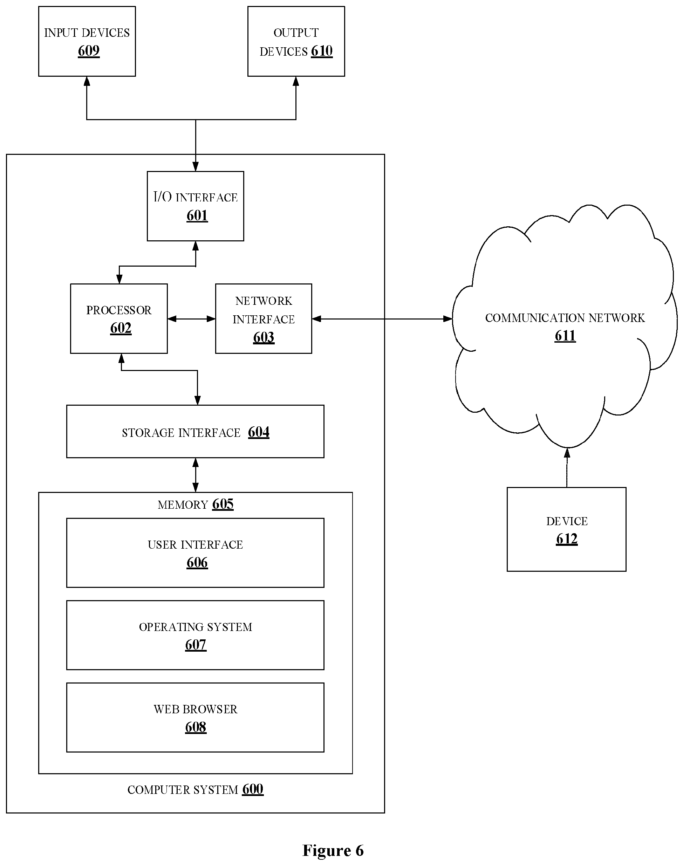

**Figure 6** illustrates a block diagram of a computer system 600 for implementing embodiments consistent with the present disclosure. In an embodiment, the computer system 600 is used to implement the synchronization system 101. The computer system 600 may include a central processing unit ("CPU" or "processor") 602. The processor 602 may include at least one data processor for executing processes in Virtual Storage Area Network. The processor 602 may include specialized processing units such as, integrated system (bus) controllers, memory management control units, floating point units, graphics processing units, digital signal processing units, etc.

The processor 602 may be disposed in communication with one or more input/output (I/O) devices 609 and 610 via I/O interface 601. The I/O interface 601 may employ communication protocols/methods such as, without limitation, audio, analog, digital, monaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 601, the computer system 600 may communicate with one or more I/O devices 609 and 610. For example, the input devices 609 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output devices 610 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The processor 602 may be disposed in communication with the communication network 611 via a network interface 603. The network interface 603 may communicate with the communication network 611. The network interface 603 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 611 may include, without limitation, a direct interconnection, local area network (LAN), wide area network (WAN), wireless network (e.g., using Wireless Application Protocol), the Internet, etc. Using the network interface 603 and the communication network 611, the computer system 600 may communicate with a device 612 for synchronizing plurality of events associated with one or more processes in the assembly line for tracing the entity. The network interface 603 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 611 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 602 may be disposed in communication with a memory 605 (e.g., RAM, ROM, etc. not shown in **Figure 6)** via a storage interface 604. The storage interface 604 may connect to memory 605 including, without limitation, memory drives, removable disc drives, etc., employing connection protocols such as, serial advanced technology attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 605 may store a collection of program or database components, including, without limitation, user interface 606, an operating system 607 etc. In some embodiments, computer system 600 may store user/application data 606, such as, the data, variables, records, etc., as described in this disclosure. Such databases may be implemented as fault-tolerant, relational, scalable, secure databases such as Oracle ® or Sybase®.

The operating system 607 may facilitate resource management and operation of the computer system 600. Examples of operating systems include, without limitation, APPLE MACINTOSH® OS X, UNIX®, UNIX-like system distributions (E.G., BERKELEY SOFTWARE DISTRIBUTION™ (BSD), FREEBSD™, NETBSD™, OPENBSD™, etc.), LINUX DISTRIBUTIONS™ (E.G., RED HAT™, UBUNTU™, KUBUNTU™, etc.), IBM™ OS/2, MICROSOFT™ WINDOWS™

(XP™, VISTA™/7/8, 10 etc.), APPLE® IOS™, GOOGLE® ANDROID™, BLACKBERRY® OS, or the like.

In some embodiments, the computer system 600 may implement a web browser 608 stored program component. The web browser 608 may be a hypertext viewing application, such as Microsoft Internet Explorer, Google Chrome, Mozilla Firefox, Apple Safari, etc. Secure web browsing may be provided using Hypertext Transport Protocol Secure (HTTPS), Secure Sockets Layer (SSL), Transport Layer Security (TLS), etc. Web browsers 608 may utilize facilities such as AJAX, DHTML, Adobe Flash, JavaScript, Java, Application Programming Interfaces (APIs), etc. In some embodiments, the computer system 600 may implement a mail server stored program component. The mail server may be an Internet mail server such as Microsoft Exchange, or the like. The mail server may utilize facilities such as ASP, ActiveX, ANSI C++/C#, Microsoft.NET, Common Gateway Interface (CGI) scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system 600 may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

An embodiment of the present disclosure provisions a method for synchronizing plurality of events associated with one or more processes of the one or more devices in the assembly line for tracing the entity. Thus, the entity may be traced efficiently and replaced or repaired in case of any defects.

An embodiment of the present disclosure assigns weight to each of the plurality of events which helps in enabling better traceability of the entity in case when an issue is detected and thus reduces cost for tracing the entity.

An embodiment of the present disclosure helps in improving the synchronization performance by providing feedback to the network architecture when the first timestamp of the plurality of events are not synchronized.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may include media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media may include all computer-readable media except for a transitory. The code implementing the described operations may further be implemented in hardware logic (e.g., an integrated circuit chip, Programmable Gate Array (PGA), Application Specific Integrated Circuit (ASIC), etc.).

An "article of manufacture" includes non-transitory computer readable medium, and /or hardware logic, in which code may be implemented. A device in which the code implementing the described embodiments of operations is encoded may include a computer readable medium or hardware logic. Of course, those skilled in the art will recognize that many modifications may be made to this configuration without departing from the scope of the invention, and that the article of manufacture may include suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 5** show certain events occurring in a certain order. In alternative embodiments, certain operations may be performed in a different order, modified, or removed. Moreover, steps may be added to the above-described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Referral numerals:**

| Reference Number | Description |
|---|---|
| 100 | Environment |
| 101 | Synchronization system |
| 102 | Device |
| 103 | Communication network |
| 104 | Processor |
| 105 | I/O interface |
| 106 | Memory |
| 107 | Modules |
| 108 | Data |
| 201 | Information Reception Module |
| 202 | Synchronization Module |
| 203 | Other Modules |
| 204 | Input Data |
| 205 | Timestamp Data |
| 206 | Other Data |
| 600 | Computer System |
| 601 | I/O Interface |
| 602 | Processor |
| 603 | Network Interface |
| 604 | Storage Interface |
| 605 | Memory |
| 606 | User Interface |
| 607 | Operating System |
| 608 | Web Browser |
| 609 | Input Devices |
| 610 | Output Devices |

(continued)

| Reference Number | Description |
|---|---|
| 611 | Communication Network |
| 612 | Device |

**Claims**

1. A method (500) for synchronizing plurality of events associated with one or more processes in an assembly line for tracing an entity obtained from the one or more processes, the method comprising:

   receiving (502), by a synchronization system, information related to a plurality of events associated with the one or more processes from one or more devices (102) in the assembly line, wherein the plurality of events are procedures in a specific industry and each of the plurality of events comprises a respective first timestamp, wherein the one or more processes vary based on the industry and the one or more devices (102) in the industry; **characterized by**:
   synchronizing (504), by the synchronization system, the first timestamp between each of the plurality of events by performing a first level synchronization and a second level synchronization, wherein the first level synchronization comprises correlating each of a pair of events of the plurality of events based on the first timestamp related to respective events in the pair of events to obtain synchronization parameters, and wherein the second level of synchronization comprises updating the synchronization parameters to convert the first timestamp of each of the plurality of events to a second timestamp with respect to a common reference timestamp, wherein the synchronization parameters comprise skew drift and offset value related to the first timestamp of each of the plurality of events, and wherein upon synchronizing the first timestamp, further comprises:

      mapping, by the synchronization system (101), the plurality of events based on weights assigned to each pair of events of the plurality events and weights assigned to each event within each of the pair of events; and
      tracing, by the synchronization system (101), the entity obtained from the one or more processes in the assembly line upon mapping of the plurality of events, wherein the weights assigned to each of the plurality of events is based on predefined parameters, and wherein the predefined parameters comprise arrival time, departure time, processing duration and number of distinct data associated with the plurality of events.

2. The method of claim 1, wherein the step of correlating each of a pair of events of the plurality of events based on the first timestamp related to respective events in the pair of events is controlled periodically based on rate of the skew drift of the plurality of events and frequency of correlating the first timestamp of the plurality of events.

3. The method of claim 1, wherein receiving the information related to the plurality of events comprises:

   analysing, by the synchronization system (101), one or more parameters related to the one or more devices (102) in the assembly line;
   identifying, by the synchronization system (101), one or more sensors and positioning of the one or more sensors at the one or more devices (102);
   determining, by the synchronization system (101), a rate for sensing information by the identified one or more sensors, wherein the information relates to the plurality of events associated with the one or more processes of the one or more devices (102);
   determining, by the synchronization system (101), a rate of synchronizing the plurality of events for the first level synchronization, wherein the rate of synchronizing relates to interaction between the one or more devices (102) in the assembly line; and
   determining, by the synchronization system (101), a network for transmitting the information related to the plurality of events, wherein the plurality of events is synchronized.

4. The method of claim 2, further comprising:
   providing, by the synchronization system (101), feedback to a network for one or more corrective actions when the first timestamps of the plurality of events are not synchronized.

5. The method of claim 1, further comprising:

   identifying, by the synchronization system (101), one or more defects in the entity based on a corresponding quality value assigned to the entity, wherein the quality value is a combination of weights assigned to each of the plurality of events; and

recalling, by the synchronization system (101), the entity associated with the one or more defects and replacing with a new entity.

6. A synchronization system (101) for synchronizing plurality of events associated with one or more processes in an assembly line for tracing an entity obtained from the one or more processes, comprising:

a processor (104); and

a memory (106) communicatively coupled to the processor (104), wherein the memory stores processor-executable instructions, which, on execution, cause the processor (104) to:

receive information related to a plurality of events associated with the one or more processes from one or more devices (102) in the assembly line, wherein the plurality of events are procedures in a specific industry and each of the plurality of events comprises a respective first timestamp, wherein the one or more processes vary based on the industry and the one or more devices (102) in the industry; and

synchronize the first timestamp between each of the plurality of events by performing a first level synchronization and a second level synchronization, wherein the first level synchronization comprises correlating each of a pair of events of the plurality of events based on the first timestamp related to respective events in the pair of events to obtain synchronization parameters, and wherein the second level of synchronization comprises updating the synchronization parameters to convert the first timestamp of each of the plurality of events to a second timestamp with respect to a common reference timestamp, wherein the synchronization parameters comprise skew drift and offset value related to the first timestamp of each of the plurality of events, and wherein upon synchronizing the first timestamp, further comprises:

mapping, by the synchronization system (101), the plurality of events based on weights assigned to each pair of events of the plurality events and weights assigned to each event within each of the pair of events; and

tracing, by the synchronization system (101), the entity obtained from the one or more processes in the assembly line upon mapping of the plurality of events, wherein the weights assigned to each of the plurality of events is based on predefined parameters, and wherein the predefined parameters comprise arrival time, departure time, processing duration and number of distinct data associated with the plurality of events.

7. The synchronization system (101) of claim 6, wherein the step of correlating the each of a pair of events of the plurality of events based on the first timestamp related to respective events in the pair of events is controlled periodically based on rate of the skew drift of the plurality of events and frequency of correlating the first timestamp of the plurality of events.

8. The synchronization system (101) of claim 6, wherein the processor (104) receives the information related to the plurality of events by:

analysing one or more parameters related to the one or more devices (102) in the assembly line;

identifying one or more sensors and positioning of the one or more sensors at the one or more devices (102);

determining a rate for sensing information by the identified one or more sensors, wherein the information relates to the plurality of events associated with the one or more processes of the one or more devices (102);

determining a rate of synchronizing the plurality of events for the first level synchronization, wherein the rate of synchronizing relates to interaction between the one or more devices (102) in the assembly line; and

determining a network for transmitting the information related to the plurality of events, wherein the plurality of events is synchronized.

9. The synchronization system (101) of claim 7, causes the processor to:
provide feedback to a network for one or more corrective actions when the first timestamps of the plurality of events are not synchronized.

10. The synchronization system (101) of claim 6, causes the processor (104) to:

identify one or more defects in the entity based on a corresponding quality value assigned to the entity, wherein the quality value is a combination of weights assigned to each of the plurality of events; and
recall the entity associated with the one or more defects and replacing with a new entity.

11. One or more non-transitory machine-readable information storage mediums comprising one or more instructions which when executed by one or more hardware processors cause to synchronize plurality of events associated with one or more processes in an assembly line for tracing an entity obtained from the one or more processes,:

receiving information related to a plurality of events associated with the one or more processes from one or more devices in the assembly line, wherein the plurality of events are procedures in a specific industry and each of the plurality of events comprises a respective first timestamp, wherein the one or more processes vary based on the industry and the one or more devices (102) in the industry; and
synchronizing the first timestamp between each of the plurality of events by performing a first level synchronization and a second level synchronization, wherein the first level synchronization comprises correlating each of a pair of events of the plurality of events based on the first timestamp related to respective events in the pair of events to obtain synchronization parameters, and wherein the second level of synchronization comprises updating the synchronization parameters to convert the first timestamp of each of the plurality of events to a second timestamp with respect to a common reference timestamp, wherein the synchronization parameters comprise skew drift and offset value related to the first timestamp of each of the plurality of events, and wherein upon synchronizing the first timestamp, further comprises:

mapping, by the synchronization system (101), the plurality of events based on weights assigned to each pair of events of the plurality events and weights assigned to each event within each of the pair of events; and
tracing, by the synchronization system (101), the entity obtained from the one or more processes in the assembly line upon mapping of the plurality of events, wherein the weights assigned to each of the plurality of events is based on predefined parameters, and wherein the predefined parameters comprise arrival time, departure time, processing duration and number of distinct data associated with the plurality of events.

**Patentansprüche**

1. Verfahren (500) zum Synchronisieren einer Mehrzahl von Ereignissen, die einem oder mehreren Prozessen in einer Montagelinie zugeordnet sind, zum Verfolgen einer Entität, die von dem einen oder den mehreren Prozessen erhalten wird, wobei das Verfahren umfasst:
Empfangen (502), durch ein Synchronisationssystem, von Informationen, die sich auf eine Mehrzahl von Ereignissen beziehen, die dem einen oder den mehreren Prozessen zugeordnet sind, von einer oder mehreren Vorrichtungen (102) in der Montagelinie, wobei die Mehrzahl von Ereignissen Prozeduren in einer spezifischen Industrie sind und jedes der Mehrzahl von Ereignissen einen jeweiligen ersten Zeitstempel umfasst, wobei der eine oder die mehreren Prozesse basierend auf der Industrie und der einen oder den mehreren Vorrichtungen (102) in der Industrie variieren; **gekennzeichnet durch**:
Synchronisieren (504), durch das Synchronisationssystem, des ersten Zeitstempels zwischen jedem der Mehrzahl von Ereignissen durch Durchführen einer Synchronisation einer ersten Ebene und einer Synchronisation einer zweiten Ebene, wobei die Synchronisation der ersten Ebene ein Korrelieren jedes eines Paars von Ereignissen der Mehrzahl von Ereignissen basierend auf dem ersten Zeitstempel umfasst, der sich auf jeweilige Ereignisse in dem Paar von Ereignissen bezieht, um Synchronisationsparameter zu erhalten, und wobei die zweite Ebene der Synchronisation ein Aktualisieren der Synchronisationsparameter umfasst, um den ersten Zeitstempel jedes der Mehrzahl von Ereignissen in einen zweiten Zeitstempel in Bezug auf einen gemeinsamen Referenzzeitstempel umzuwandeln, wobei die Synchronisationsparameter eine Versatzabweichung und einen Versatzwert umfassen, die sich auf den ersten Zeitstempel jedes der Mehrzahl von Ereignissen beziehen, und wobei das Synchronisieren des ersten Zeitstempels ferner umfasst:

Abbilden, durch das Synchronisationssystem (101), der Mehrzahl von Ereignissen basierend auf Gewichtungen, die jedem Paar von Ereignissen der Mehrzahl von Ereignissen zugewiesen sind, und Gewichtungen, die jedem Ereignis innerhalb jedes des Paars von Ereignissen zugewiesen sind; und
Verfolgen, durch das Synchronisationssystem (101), der Entität, die von dem einen oder den mehreren Prozessen in der Montagelinie beim Abbilden der Mehrzahl von Ereignissen erhalten wird, wobei die Gewichtungen, die jedem der Mehrzahl von Ereignissen zugewiesen sind, auf vordefinierten Parametern basieren, und wobei die vordefinierten Parameter eine Ankunftszeit, eine Abfahrtszeit, eine Verarbeitungsdauer und eine Anzahl von verschiedenen Daten umfassen, die der Mehrzahl von Ereignissen zugeordnet sind.

**2.** Verfahren nach Anspruch 1, wobei der Schritt des Korrelierens jedes eines Paars von Ereignissen der Mehrzahl von Ereignissen basierend auf dem ersten Zeitstempel, der sich auf jeweilige Ereignisse in dem Paar von Ereignissen bezieht, periodisch basierend auf einer Rate der Versatzabweichung der Mehrzahl von Ereignissen und einer Frequenz des Korrelierens des ersten Zeitstempels der Mehrzahl von Ereignissen gesteuert wird.

**3.** Verfahren nach Anspruch 1, wobei das Empfangen der Informationen, die sich auf die Mehrzahl von Ereignissen beziehen, Folgendes umfasst:

Analysieren, durch das Synchronisationssystem (101), eines oder mehrerer Parameter, die sich auf die eine oder die mehreren Vorrichtungen (102) in der Montagelinie beziehen;
Identifizieren, durch das Synchronisationssystem (101), eines oder mehrerer Sensoren und Positionieren des einen oder der mehreren Sensoren an der einen oder den mehreren Vorrichtungen (102);
Bestimmen, durch das Synchronisationssystem (101), einer Rate zum Erfassen von Informationen durch den identifizierten einen oder die identifizierten mehreren Sensoren, wobei sich die Informationen auf die Mehrzahl von Ereignissen beziehen, die dem einen oder den mehreren Prozessen der einen oder der mehreren Vorrichtungen (102) zugeordnet sind;
Bestimmen, durch das Synchronisationssystem (101), einer Rate des Synchronisierens der Mehrzahl von Ereignissen für die Synchronisation der ersten Ebene, wobei sich die Rate des Synchronisierens auf eine Interaktion zwischen der einen oder den mehreren Vorrichtungen (102) in der Montagelinie bezieht; und
Bestimmen, durch das Synchronisationssystem (101), eines Netzwerks zum Übertragen der Informationen, die sich auf die Mehrzahl von Ereignissen beziehen, wobei die Mehrzahl von Ereignissen synchronisiert ist.

**4.** Verfahren nach Anspruch 2, ferner umfassend:
Bereitstellen, durch das Synchronisationssystem (101), einer Rückmeldung an ein Netzwerk für eine oder mehrere Korrekturmaßnahmen, wenn die ersten Zeitstempel der Mehrzahl von Ereignissen nicht synchronisiert sind.

**5.** Verfahren nach Anspruch 1, ferner umfassend:

Identifizieren, durch das Synchronisationssystem (101), eines oder mehrerer Defekte in der Entität basierend auf einem entsprechenden Qualitätswert, der der Entität zugewiesen ist, wobei der Qualitätswert eine Kombination von Gewichtungen ist, die jedem der Mehrzahl von Ereignissen zugewiesen sind; und
Abrufen, durch das Synchronisationssystem (101), der Entität, die mit dem einen oder den mehreren Defekten assoziiert ist, und Ersetzen durch eine neue Entität.

**6.** Synchronisationssystem (101) zum Synchronisieren einer Mehrzahl von Ereignissen, die einem oder mehreren Prozessen in einer Montagelinie zugeordnet sind, zum Verfolgen einer Entität, die von dem einen oder den mehreren Prozessen erhalten wird, umfassend:

einen Prozessor (104); und
einen Speicher (106), der kommunikativ mit dem Prozessor (104) gekoppelt ist, wobei der Speicher prozessorausführbare Anweisungen speichert, die bei Ausführung den Prozessor (104) veranlassen zum:

Empfangen von Informationen, die sich auf eine Mehrzahl von Ereignissen beziehen, die dem einen oder den mehreren Prozessen zugeordnet sind, von einer oder mehreren Vorrichtungen (102) in der Montagelinie, wobei die Mehrzahl von Ereignissen Prozeduren in einer spezifischen Industrie sind und jedes der Mehrzahl von Ereignissen einen jeweiligen ersten Zeitstempel umfasst, wobei der eine oder die mehreren Prozesse basierend auf der Industrie und der einen oder den mehreren Vorrichtungen (102) in der Industrie variieren; und
Synchronisieren des ersten Zeitstempels zwischen jedem der Mehrzahl von Ereignissen durch Durchführen einer Synchronisation einer ersten Ebene und einer Synchronisation einer zweiten Ebene, wobei die Synchronisation der ersten Ebene ein Korrelieren jedes eines Paars von Ereignissen der Mehrzahl von Ereignissen basierend auf dem ersten Zeitstempel umfasst, der sich auf jeweilige Ereignisse in dem Paar von Ereignissen bezieht, um Synchronisationsparameter zu erhalten, und wobei die zweite Ebene der Synchronisation ein Aktualisieren der Synchronisationsparameter umfasst, um den ersten Zeitstempel jedes der Mehrzahl von Ereignissen in einen zweiten Zeitstempel in Bezug auf einen gemeinsamen Referenzzeitstempel umzuwandeln, wobei die Synchronisationsparameter eine Versatzabweichung und einen Versatzwert umfassen, die sich auf den ersten Zeitstempel jedes der Mehrzahl von Ereignissen beziehen, und wobei das Synchronisieren des ersten Zeitstempels ferner umfasst:

Abbilden, durch das Synchronisationssystem (101), der Mehrzahl von Ereignissen basierend auf Gewichtungen, die jedem Paar von Ereignissen der Mehrzahl von Ereignissen zugewiesen sind, und Gewichtungen, die jedem Ereignis innerhalb jedes des Paars von Ereignissen zugewiesen sind; und

Verfolgen, durch das Synchronisationssystem (101), der Entität, die von dem einen oder den mehreren Prozessen in der Montagelinie beim Abbilden der Mehrzahl von Ereignissen erhalten wird, wobei die Gewichtungen, die jedem der Mehrzahl von Ereignissen zugewiesen sind, auf vordefinierten Parametern basieren, und wobei die vordefinierten Parameter eine Ankunftszeit, eine Abfahrtszeit, eine Verarbeitungsdauer und eine Anzahl von verschiedenen Daten umfassen, die der Mehrzahl von Ereignissen zugeordnet sind.

7.  Synchronisationssystem (101) nach Anspruch 6, wobei der Schritt des Korrelierens jedes eines Paars von Ereignissen der Mehrzahl von Ereignissen basierend auf dem ersten Zeitstempel, der sich auf jeweilige Ereignisse in dem Paar von Ereignissen bezieht, periodisch basierend auf einer Rate der Versatzabweichung der Mehrzahl von Ereignissen und einer Frequenz des Korrelierens des ersten Zeitstempels der Mehrzahl von Ereignissen gesteuert wird.

8.  Synchronisationssystem (101) nach Anspruch 6, wobei der Prozessor (104) die Informationen, die sich auf die Mehrzahl von Ereignissen beziehen, durch Folgendes empfängt:

    Analysieren eines oder mehrerer Parameter, die sich auf die eine oder die mehreren Vorrichtungen (102) in der Montagelinie beziehen;
    Identifizieren eines oder mehrerer Sensoren und Positionieren des einen oder der mehreren Sensoren an der einen oder den mehreren Vorrichtungen (102);
    Bestimmen einer Rate zum Erfassen von Informationen durch den identifizierten einen oder die identifizierten mehreren Sensoren, wobei sich die Informationen auf die Mehrzahl von Ereignissen beziehen, die dem einen oder den mehreren Prozessen der einen oder der mehreren Vorrichtungen (102) zugeordnet sind;
    Bestimmen einer Rate des Synchronisierens der Mehrzahl von Ereignissen für die Synchronisation der ersten Ebene, wobei sich die Rate des Synchronisierens auf eine Interaktion zwischen der einen oder den mehreren Vorrichtungen (102) in der Montagelinie bezieht; und
    Bestimmen eines Netzwerks zum Übertragen der Informationen, die sich auf die Mehrzahl von Ereignissen beziehen, wobei die Mehrzahl von Ereignissen synchronisiert ist.

9.  Synchronisationssystem (101) nach Anspruch 7, das den Prozessor zu Folgendem veranlasst:
    Bereitstellen einer Rückmeldung an ein Netzwerk für eine oder mehrere Korrekturmaßnahmen, wenn die ersten Zeitstempel der Mehrzahl von Ereignissen nicht synchronisiert sind.

10.  Synchronisationssystem (101) nach Anspruch 6, das den Prozessor (104) zu Folgendem veranlasst:

    Identifizieren eines oder mehrerer Defekte in der Entität basierend auf einem entsprechenden Qualitätswert, der der Entität zugewiesen ist, wobei der Qualitätswert eine Kombination von Gewichtungen ist, die jedem der Mehrzahl von Ereignissen zugewiesen sind; und
    Abrufen der Entität, die mit dem einen oder den mehreren Defekten assoziiert ist, und Ersetzen durch eine neue Entität.

11.  Ein oder mehrere nichtflüchtige maschinenlesbare Informationsspeichermedien, die eine oder mehrere Anweisungen umfassen, die bei Ausführung durch einen oder mehrere Hardwareprozessoren bewirken, dass eine Mehrzahl von Ereignissen, die einem oder mehreren Prozessen in einer Montagelinie zugeordnet sind, zum Verfolgen einer Entität, die von dem einen oder den mehreren Prozessen erhalten wird, synchronisiert wird:

    Empfangen von Informationen, die sich auf eine Mehrzahl von Ereignissen beziehen, die dem einen oder den mehreren Prozessen zugeordnet sind, von einer oder mehreren Vorrichtungen in der Montagelinie, wobei die Mehrzahl von Ereignissen Prozeduren in einer spezifischen Industrie sind und jedes der Mehrzahl von Ereignissen einen jeweiligen ersten Zeitstempel umfasst, wobei der eine oder die mehreren Prozesse basierend auf der Industrie und der einen oder den mehreren Vorrichtungen (102) in der Industrie variieren; und
    Synchronisieren des ersten Zeitstempels zwischen jedem der Mehrzahl von Ereignissen durch Durchführen einer Synchronisation einer ersten Ebene und einer Synchronisation einer zweiten Ebene, wobei die Synchronisation der ersten Ebene ein Korrelieren jedes eines Paars von Ereignissen der Mehrzahl von Ereignissen basierend auf dem ersten Zeitstempel umfasst, der sich auf jeweilige Ereignisse in dem Paar von Ereignissen bezieht, um Synchronisationsparameter zu erhalten, und wobei die zweite Ebene der Synchronisation ein Aktualisieren der Synchronisationsparameter umfasst, um den ersten Zeitstempel jedes der Mehrzahl von Ereignissen in einen zweiten Zeitstempel in Bezug auf einen gemeinsamen Referenzzeitstempel umzuwandeln, wobei die Synchronisationsparameter eine Versatzabweichung und einen Versatzwert umfassen, die sich auf den ersten Zeitstempel jedes der Mehrzahl von Ereignissen beziehen, und wobei das Synchronisieren des ersten Zeitstempels ferner umfasst:

Abbilden, durch das Synchronisationssystem (101), der Mehrzahl von Ereignissen basierend auf Gewichtungen, die jedem Paar von Ereignissen der Mehrzahl von Ereignissen zugewiesen sind, und Gewichtungen, die jedem Ereignis innerhalb jedes des Paars von Ereignissen zugewiesen sind; und Verfolgen, durch das Synchronisationssystem (101), der Entität, die von dem einen oder den mehreren Prozessen in der Montagelinie beim Abbilden der Mehrzahl von Ereignissen erhalten wird, wobei die Gewichtungen, die jedem der Mehrzahl von Ereignissen zugewiesen sind, auf vordefinierten Parametern basieren, und wobei die vordefinierten Parameter eine Ankunftszeit, eine Abfahrtszeit, eine Verarbeitungsdauer und eine Anzahl von verschiedenen Daten umfassen, die der Mehrzahl von Ereignissen zugeordnet sind.

**Revendications**

1.  Procédé (500) de synchronisation d'une pluralité d'événements associés à un ou plusieurs processus dans une chaîne d'assemblage pour le traçage d'une entité obtenue à partir des un ou plusieurs processus, le procédé comprenant :

    la réception (502), par un système de synchronisation, d'informations relatives à une pluralité d'événements associés aux un ou plusieurs processus à partir d'un ou plusieurs dispositifs (102) dans la chaîne d'assemblage, dans lequel la pluralité d'événements sont des procédures dans une industrie spécifique et chacun de la pluralité d'événements comprend une première estampille temporelle respective, dans lequel les un ou plusieurs processus varient sur la base de l'industrie et des un ou plusieurs dispositifs (102) dans l'industrie ; **caractérisé par** :

    la synchronisation (504), par le système de synchronisation, de la première estampille temporelle entre chacun de la pluralité d'événements en effectuant une synchronisation de premier niveau et une synchronisation de second niveau, dans lequel la synchronisation de premier niveau comprend la corrélation de chacun d'une paire d'événements de la pluralité d'événements sur la base de la première estampille temporelle relative à des événements respectifs dans la paire d'événements pour obtenir des paramètres de synchronisation, et dans lequel le second niveau de synchronisation comprend la mise à jour des paramètres de synchronisation pour convertir la première estampille temporelle de chacun de la pluralité d'événements en une seconde estampille temporelle par rapport à une estampille temporelle de référence commune, dans lequel les paramètres de synchronisation comprennent une dérive de biais et une valeur de décalage relatives à la première estampille temporelle de chacun de la pluralité d'événements, et dans lequel lors de la synchronisation de la première estampille temporelle, la synchronisation comprend en outre :

    le mappage, par le système de synchronisation (101), de la pluralité d'événements sur la base de poids attribués à chaque paire d'événements de la pluralité d'événements et de poids attribués à chaque événement dans chacun de la paire d'événements ; et
    le traçage, par le système de synchronisation (101), de l'entité obtenue à partir des un ou plusieurs processus dans la chaîne d'assemblage lors du mappage de la pluralité d'événements, dans lequel les poids attribués à chacun de la pluralité d'événements sont basés sur des paramètres prédéfinis, et dans lequel les paramètres prédéfinis comprennent un temps d'arrivée, un temps de départ, une durée de traitement et un nombre de données distinctes associées à la pluralité d'événements.

2.  Procédé selon la revendication 1, dans lequel l'étape de corrélation de chacun d'une paire d'événements de la pluralité d'événements sur la base de la première estampille temporelle relative à des événements respectifs dans la paire d'événements est commandée périodiquement sur la base d'un taux de la dérive de biais de la pluralité d'événements et d'une fréquence de corrélation de la première estampille temporelle de la pluralité d'événements.

3.  Procédé selon la revendication 1, dans lequel la réception des informations relatives à la pluralité d'événements comprend :

l'analyse, par le système de synchronisation (101), d'un ou plusieurs paramètres relatifs aux un ou plusieurs dispositifs (102) dans la chaîne d'assemblage ;

l'identification, par le système de synchronisation (101), d'un ou plusieurs capteurs et le positionnement des un ou plusieurs capteurs au niveau des un ou plusieurs dispositifs (102) ;

la détermination, par le système de synchronisation (101), d'un taux de détection d'informations par les un ou plusieurs capteurs identifiés, dans lequel les informations concernent la pluralité d'événements associés aux un ou plusieurs processus des un ou plusieurs dispositifs (102) ;

la détermination, par le système de synchronisation (101), d'un taux de synchronisation de la pluralité d'événements pour la synchronisation de premier niveau, dans lequel le taux de synchronisation concerne une interaction entre les un ou plusieurs dispositifs (102) dans la chaîne d'assemblage ; et

la détermination, par le système de synchronisation (101), d'un réseau pour la transmission des informations relatives à la pluralité d'événements, dans lequel la pluralité d'événements est synchronisée.

4. Procédé selon la revendication 2, comprenant en outre :

la fourniture, par le système de synchronisation (101), d'une rétroaction à un réseau pour une ou plusieurs actions correctives lorsque les premières estampilles temporelles de la pluralité d'événements ne sont pas synchronisées.

5. Procédé selon la revendication 1, comprenant en outre :

l'identification, par le système de synchronisation (101), d'un ou plusieurs défauts dans l'entité sur la base d'une valeur de qualité correspondante attribuée à l'entité, dans lequel la valeur de qualité est une combinaison de poids attribués à chacun de la pluralité d'événements ; et

le rappel, par le système de synchronisation (101), de l'entité associée aux un ou plusieurs défauts et le remplacement par une nouvelle entité.

6. Système de synchronisation (101) de synchronisation d'une pluralité d'événements associés à un ou plusieurs processus dans une chaîne d'assemblage pour le traçage d'une entité obtenue à partir des un ou plusieurs processus, comprenant :

un processeur (104) ; et

une mémoire (106) couplée en communication au processeur (104), dans lequel la mémoire stocke des instructions exécutables par processeur qui, lors de l'exécution, amènent le processeur (104) à :

recevoir des informations relatives à une pluralité d'événements associés aux un ou plusieurs processus à partir d'un ou plusieurs dispositifs (102) dans la chaîne d'assemblage, dans lequel la pluralité d'événements sont des procédures dans une industrie spécifique et chacun de la pluralité d'événements comprend une première estampille temporelle respective, dans lequel les un ou plusieurs processus varient sur la base de l'industrie et des un ou plusieurs dispositifs (102) dans l'industrie ; et

synchroniser la première estampille temporelle entre chacun de la pluralité d'événements en effectuant une synchronisation de premier niveau et une synchronisation de second niveau, dans lequel la synchronisation de premier niveau comprend la corrélation de chacun d'une paire d'événements de la pluralité d'événements sur la base de la première estampille temporelle relative à des événements respectifs dans la paire d'événements pour obtenir des paramètres de synchronisation, et dans lequel le second niveau de synchronisation comprend la mise à jour des paramètres de synchronisation pour convertir la première estampille temporelle de chacun de la pluralité d'événements en une seconde estampille temporelle par rapport à une estampille temporelle de référence commune, dans lequel les paramètres de synchronisation comprennent une dérive de biais et une valeur de décalage relatives à la première estampille temporelle de chacun de la pluralité d'événements, et dans lequel lors de la synchronisation de la première estampille temporelle, la synchronisation comprend en outre :

le mappage, par le système de synchronisation (101), de la pluralité d'événements sur la base de poids attribués à chaque paire d'événements de la pluralité d'événements et de poids attribués à chaque événement dans chacun de la paire d'événements ; et

le traçage, par le système de synchronisation (101), de l'entité obtenue à partir des un ou plusieurs processus dans la chaîne d'assemblage lors du mappage de la pluralité d'événements, dans lequel les poids attribués à chacun de la pluralité d'événements sont basés sur des paramètres prédéfinis, et dans lequel les paramètres prédéfinis comprennent un temps d'arrivée, un temps de départ, une durée de traitement et un nombre de données distinctes associées à la pluralité d'événements.

7. Système de synchronisation (101) selon la revendication 6, dans lequel l'étape de corrélation de chacun d'une paire d'événements de la pluralité d'événements sur la base de la première estampille temporelle relative à des événements respectifs dans la paire d'événements est commandée périodiquement sur la base d'un taux de la dérive de biais de la pluralité d'événements et d'une fréquence de corrélation de la première estampille temporelle de la pluralité d'événements.

8. Système de synchronisation (101) selon la revendication 6, dans lequel le processeur (104) reçoit les informations relatives à la pluralité d'événements par :

l'analyse d'un ou plusieurs paramètres relatifs aux un ou plusieurs dispositifs (102) dans la chaîne d'assemblage ; l'identification d'un ou plusieurs capteurs et le positionnement des un ou plusieurs capteurs au niveau des un ou plusieurs dispositifs (102) ;
la détermination d'un taux de détection d'informations par les un ou plusieurs capteurs identifiés, dans lequel les informations concernent la pluralité d'événements associés aux un ou plusieurs processus des un ou plusieurs dispositifs (102) ;
la détermination d'un taux de synchronisation de la pluralité d'événements pour la synchronisation de premier niveau, dans lequel le taux de synchronisation concerne une interaction entre les un ou plusieurs dispositifs (102) dans la chaîne d'assemblage ; et
la détermination d'un réseau pour la transmission des informations relatives à la pluralité d'événements, dans lequel la pluralité d'événements est synchronisée.

9. Système de synchronisation (101) selon la revendication 7, amène le processeur à :
fournir une rétroaction à un réseau pour une ou plusieurs actions correctives lorsque les premières estampilles temporelles de la pluralité d'événements ne sont pas synchronisées.

10. Système de synchronisation (101) selon la revendication 6, amène le processeur (104) à :

identifier un ou plusieurs défauts dans l'entité sur la base d'une valeur de qualité correspondante attribuée à l'entité, dans lequel la valeur de qualité est une combinaison de poids attribués à chacun de la pluralité d'événements ; et
rappeler l'entité associée aux un ou plusieurs défauts et le remplacement par une nouvelle entité.

11. Un ou plusieurs supports de stockage d'informations lisibles par machine non transitoires comprenant une ou plusieurs instructions qui, lorsqu'elles sont exécutées par un ou plusieurs processeurs matériels, amènent une pluralité d'événements associés à un ou plusieurs processus dans une chaîne d'assemblage pour le traçage d'une entité obtenue à partir des un ou plusieurs processus à :

recevoir des informations relatives à une pluralité d'événements associés aux un ou plusieurs processus à partir d'un ou plusieurs dispositifs dans la chaîne d'assemblage, dans lequel la pluralité d'événements sont des procédures dans une industrie spécifique et chacun de la pluralité d'événements comprend une première estampille temporelle respective, dans lequel les un ou plusieurs processus varient sur la base de l'industrie et des un ou plusieurs dispositifs (102) dans l'industrie ; et
synchroniser la première estampille temporelle entre chacun de la pluralité d'événements en effectuant une synchronisation de premier niveau et une synchronisation de second niveau, dans lequel la synchronisation de premier niveau comprend la corrélation de chacun d'une paire d'événements de la pluralité d'événements sur la base de la première estampille temporelle relative à des événements respectifs dans la paire d'événements pour obtenir des paramètres de synchronisation, et dans lequel le second niveau de synchronisation comprend la mise à jour des paramètres de synchronisation pour convertir la première estampille temporelle de chacun de la pluralité d'événements en une seconde estampille temporelle par rapport à une estampille temporelle de référence commune, dans lequel les paramètres de synchronisation comprennent une dérive de biais et une valeur de décalage relatives à la première estampille temporelle de chacun de la pluralité d'événements, et dans lequel lors de la synchronisation de la première estampille temporelle, la synchronisation comprend en outre :
le mappage, par le système de synchronisation (101), de la pluralité d'événements sur la base de poids attribués à chaque paire d'événements de la pluralité d'événements et de poids attribués à chaque événement dans chacun de la paire d'événements ; et

le traçage, par le système de synchronisation (101), de l'entité obtenue à partir des un ou plusieurs processus dans la chaîne d'assemblage lors du mappage de la pluralité d'événements, dans lequel les poids attribués à chacun de la pluralité d'événements sont basés sur des paramètres prédéfinis, et dans lequel les paramètres prédéfinis comprennent un temps d'arrivée, un temps de départ, une durée de traitement et un nombre de données distinctes associées à la pluralité d'événements.

100

SYNCHRONIZATION SYSTEM
**101**

DEVICE
**102₁**

DEVICE
**102₂**

DEVICE
**102ₙ**

COMMUNICATION
NETWORK
**103**

PROCESSOR
**104**

I/O INTERFACE
**105**

MEMORY **106**

**Figure 1**

SYNCHRONIZATION SYSTEM
**101**

PROCESSOR
**104**

I/O INTERFACE
**105**

MEMORY **106**

MODULES **107**

INFORMATION RECEPTION MODULE
**201**

SYNCHRONIZATION MODULE
**202**

OTHER MODULES
**203**

DATA **108**

INPUT DATA
**204**

TIMESTAMP DATA
**205**

OTHER DATA
**206**

**Figure 2**

*300*

```
┌──────────────┐   ┌──────────────┐   ┌──────────────┐   ┌──────────────┐   ┌──────────────┐
│ ANALYSIS OF  │──▶│ SENSING AND  │──▶│LOCAL PROCESSING│─▶│  NETWORKING  │──▶│ DRIVER DESIGN│
│ CONSTRAINTS  │   │SENSING MODALITIES││AND TRANSMISSION│  │              │   │              │
└──────────────┘   └──────────────┘   └──────────────┘   └──────────────┘   └──────────────┘
                                                                                      │
                                                                                      ▼
                        ┌──────────────┐                           ┌──────────────┐
                        │    ENTITY    │◀──────────────────────────│DATABASE DESIGN│
                        │ TRACEABILITY │                           │              │
                        └──────────────┘                           └──────────────┘
```

**Figure 3**

*400*

**Figure 4**

500

RECEIVE INFORMATION RELATED TO PLURALITY OF EVENTS
ASSOCIATED WITH ONE OR MORE PROCESSES FROM ONE OR MORE
DEVICES IN ASSEMBLY LINE
**501**

SYNCHRONIZE FIRST TIMESTAMP BETWEEN EACH OF PLURALITY
OF EVENTS BY PERFORMING FIRST LEVEL SYNCHRONIZATION AND
SECOND LEVEL SYNCHRONIZATION
**502**

**Figure 5**

INPUT DEVICES
**609**

OUTPUT
DEVICES **610**

I/O INTERFACE
**601**

PROCESSOR
**602**

NETWORK
INTERFACE
**603**

COMMUNICATION NETWORK
**611**

STORAGE INTERFACE **604**

MEMORY **605**

USER INTERFACE
**606**

OPERATING SYSTEM
**607**

WEB BROWSER
**608**

COMPUTER SYSTEM **600**

DEVICE
**612**

**Figure 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202241033679
- US 2021048798 A1